# EUROPEAN PATENT APPLICATION

(11) **EP 4 120 463 A1**
(43) Date of publication of application: **18.01.2023**
(21) Application number: 21925165.9
(22) Date of filing: 09.02.2021
(51) Int. Cl.: H01M 50/50, H01M 50/543, H01M 50/557

(54) **BATTERY, POWER APPARATUS, AND BATTERY MANUFACTURING METHOD AND DEVICE**

(71) Applicant: Contemporary Amperex Technology Co., Limited, Fujian PRC 352100 (CN)
(72) Inventor: CAI, Rulai, Ningde, Fujian 352100 (CN); JIANG, Liwen, Ningde, Fujian 352100 (CN); LUO, Fuping, Ningde, Fujian 352100 (CN); ZHU, Tingting, Ningde, Fujian 352100 (CN); FANG, Wumei, Ningde, Fujian 352100 (CN)
(74) Representative: Rowlands, Stuart Michael
(86) International application number: PCT/CN2021/076288
(87) International publication number: WO 2022/170492

(57) **Abstract**

The present application discloses a battery, a power apparatus, and a battery manufacturing method and device. The battery comprises a plurality of battery cells arranged in a first direction, each of the battery cells is provided with a plate-shaped electrode terminal along an end surface in the first direction, and two of the battery cells are provided with two of the electrode terminals between two opposite end surfaces that are arranged opposite to each other in the first direction. In the thickness direction of the electrode terminals, two of the electrode terminals are configured to be at least partially stacked and fixedly connected between the two end surfaces to implement the electric connection between two of the battery cells. By fixedly connecting the electrode terminals of the battery cells directly, the electric connection between two battery cells is implemented, thereby simplifying the electric connection structure between the battery cells, and reducing various risks caused by the arrangement of a bus component.

## Description

### TECHNICAL FIELD

This application relates to the field of batteries, and in particular, to a battery, an electrical device, and a method and device for manufacturing a battery.

### BACKGROUND

A chemical cell, electrochemical cell, or electrochemical battery is a type of device that converts chemical energy of positive and negative active materials into electrical energy through a redox reaction. Different from an ordinary redox reaction, the oxidation and reduction reactions in an electrochemical cell occurs separately. To be specific, the oxidation occurs at a negative electrode, the reduction occurs at the positive electrode, and electrons are gained and lost through an external circuit, thereby forming a current. That is an essential feature of all batteries. After being researched and developed over a long term, the chemical batteries have been shaping up into many different, widely applied, varieties. The batteries are applicable to huge equipment that occupies a building and small devices that are several millimeters in size. The development of modern electronic technology has imposed high requirements on the chemical batteries. Every breakthrough in the technology of chemical batteries has brought about a revolutionary development of electronic devices. Many electrochemical scientists in the world have concentrated their research and development interests in the field of chemical batteries that provide power for electric vehicles.

Due to advantages such as a small size, a high energy density, a high power density, reusability for many cycles, and a long shelf life, lithium-ion batteries as a type of chemical battery are widely used in electronic devices, electrical means of transport, electrical toys, and electrical devices. For example, currently, the lithium-ion batteries are widely used in products such as a mobile phone, a notebook computer, an electric power cart, an electric vehicle, an electric airplane, an electric ship, an electric toy car, an electric toy ship, an electric toy airplane, and a power tool.

With the ongoing development of lithium-ion battery technology, higher requirements have been imposed on the performance of lithium-ion batteries. The lithium-ion batteries are expected to meet a plurality of design requirements concurrently. Normally, battery cells in a lithium-ion battery are connected by an electrical connection structure by welding, and the electrical connection structure is a busbar component of relatively high rigidity. The busbar component is an independently manufactured structural part, and is electrically connected to electrode terminals of a battery cell by welding at least twice. Such an electrical connection structure is complicated, and the busbar component disposed brings a variety of risks and affects conductivity between the battery cells.

### SUMMARY

This application discloses a battery, an electrical device, and a method and device for manufacturing a battery to simplify an electrical connection structure between the battery cells.

According to a first aspect of this application, a battery is provided, including:
a plurality of battery cells arranged along a first direction, where a plate-like electrode terminal is disposed on each end face of each of the battery cells along a first direction, so that two electrode terminals of two battery cells are disposed between two end faces opposite to each other along the first direction; and
the two electrode terminals are configured to be at least partly stacked and fixedly connected between the two end faces along a thickness direction of the electrode terminal to enable electrical connection between the two battery cells.

With the end faces of the two battery cells being disposed opposite to each other along the first direction, the battery cells can be electrically connected to each other in a horizontal way. A plurality of battery cells can be accommodated in the height direction according to an internal mounting space of a vehicle, thereby taking full advantage of the internal mounting space of the vehicle. The two electrode terminals are fixedly connected by being stacked partly without a need to use a busbar component, thereby simplifying the electrical connection structure between the battery cells, reducing a variety of risks brought by the busbar component disposed, ensuring reliable conductivity between the battery cells, reducing the manufacturing cost of the battery, and improving the production efficiency of the battery.

In some embodiments, the electrode terminal includes:
a stack portion, configured to enable stacking of the two electrode terminals; and
an extension portion, configured to be connected to the stack portion, where the extension portion protrudes from the end face by a preset length.

With the electrode terminal including two portions that serve different functions, the stack portion is configured to enable fixed connection, and the extension portion is configured to electrically connect the stack portion to an internal component of the battery cell, thereby facilitating the design and manufacture of the electrode terminal and facilitating the electrical connection between the electrode terminals.

In some embodiments, a ratio of the preset length to a length of the stack portion along the first direction is 0.25 to 1.

If the length of the extension portion is deficient, the stack portion will be very close to the end face of the battery cell, thereby bringing inconvenience to the fixed connection between the stack portions. If the length of the extension portion is excessive, the electrode terminal is prone to occupy excessive space between the end faces of the battery cell. By limiting the ratio of the length of the extension portion to the length of the stack portion, it is convenient to implement the fixed connection between the stack portions, and the electrode terminal is prevented from occupying excessive space between the end faces of the battery cells, and the electrical connection structure of the battery cells is further optimized.

In some embodiments, the electrode terminal further includes a connecting portion, configured to connect the stack portion and the extension portion, so that the stack portion is staggered from the extension portion along the thickness direction.

Normally, the positions of the electrode terminals on the end faces of battery cells are identical. In a case that an end face of one battery cell is disposed opposite to an end face of another battery cell, the electrode terminals of adjacent battery cells will inevitably interfere with each other when the electrode terminals are stacked. To avoid the interference, the stack portion is staggered from the extension portion along the thickness direction, and the two portions are disposed at different heights. In this way, the stacking of the electrode terminals is facilitated, and the adjacent electrode terminals dodge each other, so as to form a stacking structure. Normally, the electrode terminal is formed by stamping. The stack portion, the connecting portion, and the extension portion may be made in one piece, thereby facilitating manufacturing.

In some embodiments, a distance by which the stack portion is staggered from the extension portion is not greater than 1/2 of a thickness of the electrode terminal.

If the distance by which the stack portion is staggered from the extension portion is greater than 1/2 of the thickness of the electrode terminal, the stack portions of the two electrode terminals will be separated from each other in a natural state, thereby being adverse to the fixed connection. In some embodiments, the distance by which the stack portion is staggered from the extension portion is less than or equal to 1/2 of the thickness of the electrode terminal, so that all the stack portions can contact each other.

In some embodiments, a cross section of the connecting portion is linear or arcuate in shape.

The cross section of the connecting portion may be in various shapes, as long as the stack portion is staggered from the extension portion along the thickness direction. Applicable shapes include linear and arcuate shapes, and the connection strength such shapes can meet design requirements.

In some embodiments, the electrode terminal is in a flat plate shape. The two electrode terminals of the two battery cells, which are disposed opposite to each other along the first direction, are staggered from each other along the thickness direction.

By disposing the two electrode terminals of adjacent battery cells at different positions on the end faces, the adjacent electrode terminals dodge each other, so as to form a stacking structure. The electrode terminals do not need to be punched into special shapes, thereby simplifying the structure of the electrode terminals.

In some embodiments, the stack portion includes a first stack portion and a second stack portion that are separated from each other along a second direction. The second direction is perpendicular to the thickness direction.

With the first stack portion and the second stack portion disposed, the stack portions are diversified, and the types of the fixed connection structures between the stack portions are increased.

In some embodiments, along the second direction, a ratio of a width of a gap between the first stack portion and the second stack portion to a width of the stack portion is 0 to 1/3.

The first stack portion may be adjacent to the second stack portion or not. When the first stack portion is not adjacent to the second stack portion, a gap exists between the first stack portion and the second stack portion. If the width of the gap is greater than 1/3 of the width of the stack portion, the stacks portions are prone to be separated under an external force after being fixedly connected. By limiting the width of the gap, the stability of the connection structure between the stack portions is ensured.

In some embodiments, the first stack portion is staggered from the second stack portion along the thickness direction.

With the first stack portion staggered from the second stack portion, the two fixedly connected stack portions can not only limit each other in the thickness direction, but also limit each other in the width direction, thereby improving the stability of the connection structure between the stack portions.

In some embodiments, a distance by which the first stack portion is staggered from the second stack portion is not less than a thickness of the electrode terminal.

If the distance by which the first stack portion is staggered from the second stack portion is less than the thickness of the electrode terminal, the two stack portions will interfere with each other instead of being stacked in staggered way. When the distance by which the first stack portion is staggered from the second stack portion is greater than or equal to the thickness of the electrode terminal, the two stack portions can be stacked together in a staggered way.

In some embodiments, two adjacent stack portions are configured to enable stacking of the two electrode terminals by snap-fitting into each other.

With the stack portions that can snap-fit into each other, the connection strength is increased between the stack portions. Particularly, when the battery cells are vibrating, the stack portions are not prone to separate, thereby ensuring the reliability of the electrical connection between the battery cells.

In some embodiments, one of the two adjacent stack portions includes a plug portion, and the other of the two adjacent stack portions includes a receptacle portion. The receptacle portion is configured to hold the plug portion so that the two adjacent stack portions snap-fit into each other.

Snap-fitting structures come in many types. The structures of the plug portion and the receptacle portion are highly manufacturable and formable, and facilitate snap-fitting.

In some embodiments, the stack portion is configured to be bent toward the end face along the first direction to form the plug portion and the receptacle portion.

With the stack portion bent toward the end face of the battery cell, the stack portion can form a hook shape, so that the stack portion can not only be stacked but also be hooked, thereby further improving the connection strength between the stack portions.

In some embodiments, the stack portion further includes a body portion configured to connect the extension portion and the plug portion. The body portion is disposed opposite to, and spaced apart from, the plug portion along the thickness direction to form the receptacle portion.

The snap-fitting structure formed in this way is highly manufacturable and formable, and achieves a relatively large space of the receptacle portion, thereby increasing the strength of the snap-fitting structure.

According to a second aspect of this application, an electrical device is provided. The electrical device includes the battery described in the first aspect above. The battery is configured to provide electrical energy for the electrical device.

According to a third aspect of this application, a method for manufacturing a battery is further provided, including:
providing a plurality of battery cells arranged along a first direction, where a plate-like electrode terminal is disposed on each end face of each of the battery cells along a first direction, so that two electrode terminals of two battery cells are disposed between two end faces opposite to each other along the first direction; and
stacking at least partly and connecting fixedly the two electrode terminals between the two end faces along a thickness direction of the electrode terminal to enable electrical connection between the two battery cells.

According to a fourth aspect of this application, a device for manufacturing a battery is further provided, including:
a battery cell manufacturing module, configured to manufacture a plurality of battery cells, where a plate-like electrode terminal is disposed on each end face of each of the battery cells along a first direction, so that two electrode terminals of two battery cells are disposed between two end faces opposite to each other along the first direction; and
an assembling module, configured to electrically connect the plurality of battery cells, where the two electrode terminals are configured to be at least partly stacked and fixedly connected between the two end faces along a thickness direction of the electrode terminal to enable electrical connection between the two battery cells.

### BRIEF DESCRIPTION OF DRAWINGS

The drawings described herein are intended to enable a further understanding of this application, and constitute a part of this application. The exemplary embodiments of this application and the description thereof are intended to explain this application but not to constitute any undue limitation on this application. In the drawings:
FIG. 1 is a three-dimensional schematic diagram of a battery cell according to some embodiments of this application;
FIG. 2 is a three-dimensional schematic diagram of a plurality of battery cells connected in series according to some embodiments of this application;
FIG. 3 is a schematic front view of a plurality of battery cells connected in series according to some embodiments of this application;
FIG 4 is an enlarged view of position A shown in FIG. 3;
FIG. 5 is a three-dimensional schematic diagram of an electrode terminal of a battery cell according to some embodiments of this application;
FIG. 6 is a three-dimensional schematic diagram of a connection state of electrode terminals of battery cells according to some embodiments of this application;
FIG. 7 is a schematic front view of a connection state of electrode terminals of battery cells according to some embodiments of this application;
FIG. 8 is a three-dimensional schematic diagram of an electrode terminal of a battery cell according to some embodiments of this application;
FIG. 9 is a three-dimensional schematic diagram of a connection state of electrode terminals of battery cells according to some embodiments of this application;
FIG. 10 is a three-dimensional schematic diagram of an electrode terminal of a battery cell according to some embodiments of this application;
FIG. 11 is a three-dimensional schematic diagram of an electrode terminal of a battery cell according to some embodiments of this application;
FIG. 12 is a three-dimensional schematic diagram of a connection state of electrode terminals of battery cells according to some embodiments of this application;
FIG. 13 is a schematic exploded view of a battery cell according to some embodiments of this application;
FIG. 14 is a schematic sectional view of a battery cell according to some embodiments of this application;
FIG 15 is a partial enlarged view of the battery cell shown in FIG. 14 and rotated by 90 degrees;
FIG. 16 is a schematic structural diagram of a vehicle powered by a battery disclosed herein according to some embodiments of this application;
FIG. 17 is a schematic flowchart of a method for manufacturing a battery according to some embodiments of this application; and
FIG. 18 is a schematic structural diagram of a device for manufacturing a battery according to some embodiments of this application.

Reference numerals: 1. vehicle; 10. battery; 30. controller; 40. motor; 2. battery cell; 201. housing; 202. electrode assembly; 203. connecting member; 204. adhesive; 205. top cover assembly; 2051. end cap; 2052. sealing element; 2053. electrode terminal. 20531. first electrode terminal; 20532. second electrode terminal; 2054. mounting hole; 2055. extension portion; 2056. stack portion; 20561. plug portion; 20562. receptacle portion; 20563. body portion; 2057. first stack portion; 2058. second stack portion; 2059. gap; 2060. tail; 2061. connecting portion; 3. device for manufacturing a battery; 301. battery cell manufacturing module; 302. assembling module.

### DETAILED DESCRIPTION OF EMBODIMENTS

To make the objectives, technical solutions, and advantages of this application clearer, the following gives an explicit and thorough description of the technical solutions in the embodiments of this application with reference to the drawings in the embodiments of this application. Understandably, the described embodiments are merely a part of but not all of the embodiments of this application. All other embodiments derived by a person of ordinary skill in the art based on the embodiments described herein without making any creative effort fall within the protection scope of this application.

Unless otherwise defined, all technical and scientific terms used herein have the same meanings as usually understood by a person skilled in the technical field of this application. The terms used in the specification of this application are merely intended for describing specific embodiments but are not intended to limit this application. The terms "include", "comprise", "possess", "contain", and any variations thereof used in the specification, claims, and brief description of drawings hereof are used in a non-restrictive way. Therefore, a method or device that "includes", "comprises", or "contains" one or more steps or elements, includes but is not limited to, the one or more steps or elements enumerated. The terms such as "first" and "second" used in the specification, claims, and brief description of drawings herein are intended to distinguish between different items, but are not intended to describe a specific sequence or order of precedence. In addition, the terms "first" and "second" are used merely for descriptive purposes but are not to be construed as indicating or implying relative importance or implicitly specifying the quantity of technical features indicated. Therefore, a feature qualified by "first", "second" and the like may explicitly or implicitly include one or more such features. In the description of this application, unless otherwise specified, "a plurality of" means two or more.

Understandably, in the description of this application, a direction or a positional relationship indicated by the terms such as "center", "transverse", "length", "width", "up", "down", "before", "after", "left", "right", "vertical", "horizontal", "top", "bottom", "in", "out", "axial", "radial", and "circumferential" is a direction or positional relationship based on the illustration in the drawings, and is merely intended for ease or brevity of description of this application, but not intended to indicate or imply that the indicated device or element must be located in the specified direction or constructed or operated in the specified direction. Therefore, such terms are not to be understood as a limitation on this application.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art understands the specific meanings of the terms in this application according to the context.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described in this application may be combined with other embodiments.

As mentioned above, it needs to be emphasized that the term "include/comprise" used in this specification is intended to explicitly indicate the existence of the mentioned feature, integer, step or component, but does not exclude the existence or addition of one or more other features, integers, steps, or components, or a group of features, integers, steps, or components. Unless otherwise expressly specified herein, a noun in the singular form preceded by "a", "an", or "the" herein includes the plural form thereof.

The terms "a" and "an" in this specification may mean one, but may also have the same meaning as "at least one" or "one or more". The term "approximately" qualifying a numerical value generally means the numerical value plus or minus 10% thereof, or more specifically, plus or minus 5% thereof. Unless expressly indicating only an alternative solution, the term "or" used in the claims means "and/or".

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

Batteries mentioned in this field may be classed into a primary battery and a rechargeable battery depending on rechargeability. The primary battery is informally known as a "disposable" battery or a galvanic battery because the battery is not rechargeable and has to be discarded after exhaustion of electrical power. A rechargeable battery is also called a secondary battery, a secondary cell, or a storage battery. A material for and a process of manufacturing a rechargeable battery are different from those of a primary battery. An advantage of the rechargeable battery is that the battery can be used for a plurality of cycles after being charged. An output current load capacity of the rechargeable battery is higher than that of most primary batteries. Currently, common types of rechargeable batteries include: lead-acid battery, nickel-metal hydride battery, and lithium-ion battery. The lithium-ion battery exhibits advantages such as a light weight, a high capacity (the capacity is 1.5 to 2 times that of a nickel-metal hydride battery of the same weight), and no memory effect, and exhibits a very low self-discharge rate. Therefore, despite relative expensiveness, the lithium-ion battery is widely applied. The lithium-ion battery is also applied to battery electric vehicles and hybrid vehicles. The lithium-ion battery for use in such vehicles possesses a relatively low capacity, but a relatively high output current, a relatively high charge current, and a relatively long life in spite of a relatively high cost.

The battery described in the embodiments of this application means a rechargeable battery. The following describes the conception of this application using a lithium-ion battery as an example. Understandably, this application is applicable to any other suitable types of rechargeable batteries. The battery mentioned in the embodiments of this application means a stand-alone physical module that includes one or more battery cells to provide a higher voltage and a higher capacity. For example, the battery mentioned in this application may include a battery module, a battery pack, or the like. A battery cell includes a positive electrode plate, a negative electrode plate, an electrolytic solution, and a separator, and is a basic structural unit of a battery module and a battery pack. Depending on the form of packaging, battery cells are generally classed into three types: cylindrical battery cell, prismatic battery cell, and pouch-type battery cell.

A lithium-ion battery cell works primarily by relying on movement of lithium ions between the positive electrode plate and the negative electrode plate. The lithium-ion battery cell uses an intercalated lithium compound as an electrode material. Currently, positive electrode materials typically used for lithium-ion batteries include: lithium cobalt oxide (LiCoO₂), lithium manganese oxide (LiMn₂O₄), lithium nickel oxide (LiNiO₂), and lithium iron phosphate (LiFePO₄). A separator is disposed between the positive electrode plate and the negative electrode plate to form a thin film structure of three compounded layers of materials. The thin film structure is generally wound or stacked to form an electrode assembly of a desired shape. For example, the thin film structure of three compounded layers of materials in a cylindrical battery cell is wound into a cylinder-shaped electrode assembly. The thin film structure in a prismatic battery cell is wound or stacked to form an electrode assembly in the shape of approximately a cuboid.

A plurality of battery cells may be connected together in series and/or parallel through electrode terminals, so as to be applied in various scenarios. In high-power application scenarios such as electric vehicles, a battery is applied in different hierarchical forms such as a battery cell, a battery module, and a battery pack. The battery module is formed by electrically connecting a specific quantity of battery cells together and putting the battery cells into a frame, so as to protect the battery cells from external impact, heat, vibration, and the like. The battery pack is a final state of a battery system mounted in an electric vehicle. Currently, most of battery packs are made by assembling various control and protection systems such as a battery management system (BMS) and a thermal management part on one or more battery modules. With advancement of technologies, the battery module is omissible. That is, a battery pack is directly formed from battery cells. This improvement significantly decreases the quantity of parts while enhancing a gravimetric energy density and a volumetric energy density of the battery system. A battery referred to herein includes a battery module or a battery pack.

Considering that existing battery cells are generally connected by a busbar component of relatively high rigidity by welding, and that the electrical connection structure is relatively complicated and at many risks, this application fixedly connects electrode terminals of the battery cells directly to enable electrical connection between two battery cells, thereby simplifying the electrical connection structure between the battery cells, and reducing a variety of risks brought by the busbar component disposed.

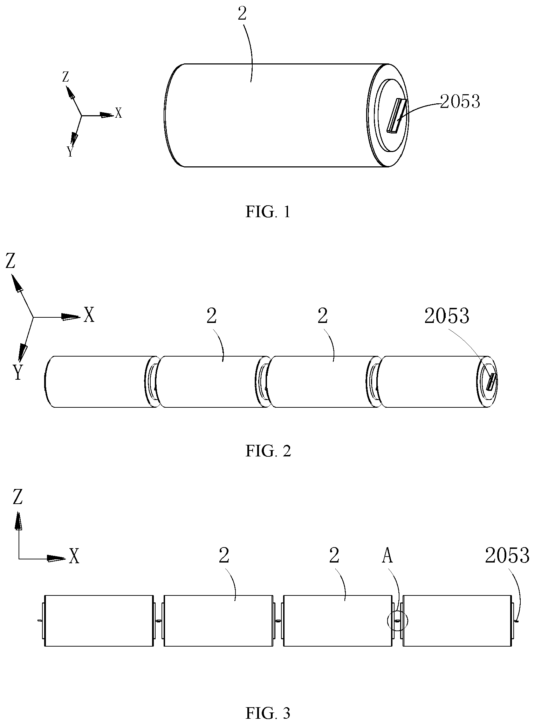

For clearer understanding of this application, the following describes the embodiments of this application in detail with reference to FIG. 1 to FIG. 18.

As shown in FIG. 1, FIG. 2, FIG. 3, and FIG. 4, a battery 10 according to an embodiment of this application includes:
a plurality of battery cells 2 arranged along a first direction X, where a plate-like electrode terminal 2053 is disposed on each end face of each of the battery cells 2 along a first direction X, so that two electrode terminals 2053 of two battery cells 2 are disposed between two end faces opposite to each other along the first direction X.

The two electrode terminals are configured to be at least partly stacked and fixedly connected between the two end faces along a thickness direction Z of the electrode terminal 2053 to enable electrical connection between the two battery cells 2.

In this embodiment, the first direction X is an axial direction of the battery cell 2 after the battery cell is fixed in the battery 10, or a length direction of the battery cell 2 after the battery cell is fixed in the battery 10.

The battery cell 2 may be in a prismatic shape, a cylindrical shape, or the like. The electrode terminals 2053 in this embodiment are applicable to the battery cells 2 of different shapes. A cross section of the electrode terminal 2053 is rectangular. The length-width ratio of the cross section is relatively high, so that the electrode terminal 2053 is in the shape of a plate.

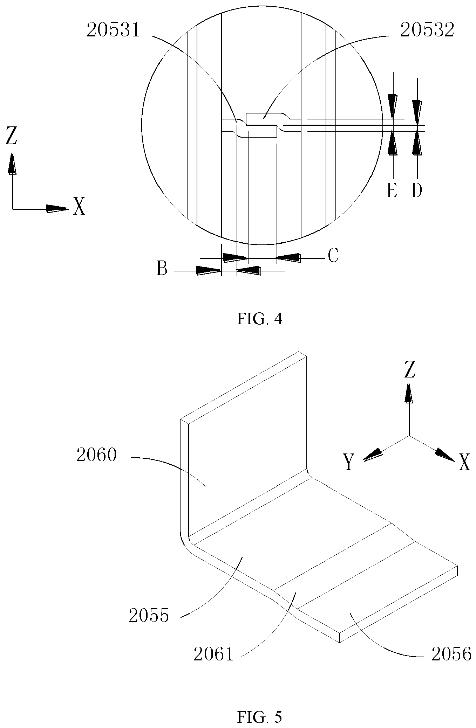

FIG. 1, FIG. 2, and FIG. 3 use one row of battery cells 2 as an example. Two electrode terminals 2053 of two battery cells 2, that is, a first electrode terminal 20531 and a second electrode terminal 20532, are disposed between two end faces opposite to each other along the first direction X. The first electrode terminal 20531 and the second electrode terminal 20532 are partly stacked and fixedly connected along the thickness direction Z, as shown in FIG. 4. The fixed connection may be implemented by welding, such as laser welding, ultrasonic welding, or other appropriate types of welding. The two battery cells 2 are electrically connected without a busbar component disposed therebetween.

With the end faces of the two battery cells 2 being disposed opposite to each other along the first direction X, the battery cells 2 can be electrically connected to each other in a horizontal way. A plurality of battery cells 2 can be accommodated in the height direction according to an internal mounting space of a vehicle, thereby taking full advantage of the internal mounting space of the vehicle. The two electrode terminals 2053 are fixedly connected by being stacked partly without a need to use a busbar component, thereby simplifying the electrical connection structure between the battery cells 2, reducing a variety of risks brought by the busbar component disposed, ensuring reliable conductivity between the battery cells 2, reducing the manufacturing cost of the battery 10, and improving the production efficiency of the battery 10.

In some embodiments, the electrode terminal 2053 includes:
a stack portion 2056, configured to enable stacking of the two electrode terminals 2053; and
an extension portion 2055, configured to be connected to the stack portion 2056, where the extension portion 2055 protrudes from the end face by a preset length.

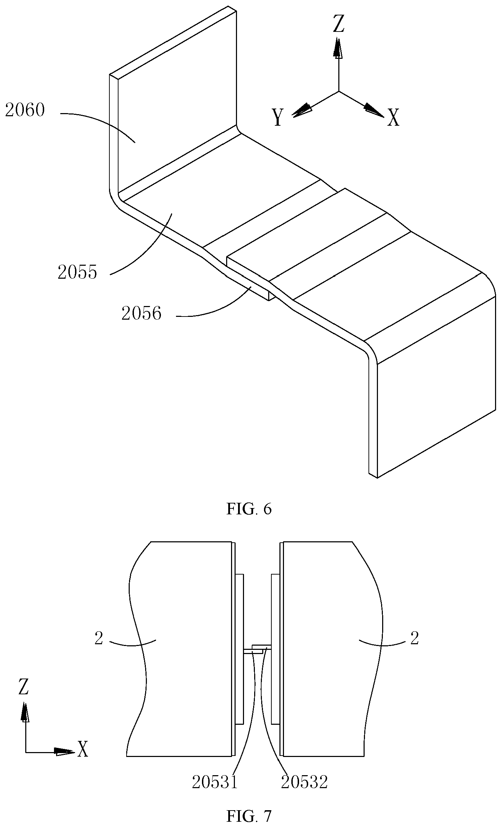

As shown in FIG. 5 and FIG. 6, the two electrode terminals 2053 are partly stacked and fixedly connected along the thickness direction Z by using a stack portion 2056. The extension portion 2055 is connected to the stack portion 2056. Referring to FIG. 4 additionally, it can be seen that the extension portion 2055 protrudes from the end face of the battery cell 2 by a preset length.

With the electrode terminal 2053 including two portions that serve different functions, the stack portion 2056 is configured to enable fixed connection, and the extension portion 2055 is configured to electrically connect the stack portion 2056 to an internal component of the battery cell 2, thereby facilitating the design and manufacture of the electrode terminal 2053 and facilitating the electrical connection between the electrode terminals 2053.

In some embodiments, a ratio of the preset length to a length of the stack portion 2056 along the first direction X is 0.25 to 1.

As shown in FIG. 4, the extension portion 2055 protrudes from the end face by a preset length B. B is a distance from the end face of the battery cell 2 to a boundary line between the extension portion 2055 and the connecting portion 2061 (to be described later) along the first direction X. The length of the stack portion 2056 is C. C is a distance from the boundary line between the connecting portion 2061 and the stack portion 2056 to the end face of the stack portion 2056 along the first direction X. In this embodiment, a ratio of B to C is 0.25 to 1, so as to facilitate the fixed connection between the stack portions 2056 and prevent the electrode terminals 2053 from occupying excessive space between the end faces of the battery cells 2.

If the length of the extension portion 2055 is deficient, the stack portion 2056 will be very close to the end face of the battery cell 2, thereby bringing inconvenience to the fixed connection between the stack portions 2056. If the length of the extension portion 2055 is excessive, the electrode terminal 2053 is prone to occupy excessive space between the end faces of the battery cell 2. By limiting the ratio of the length of the extension portion 2055 to the length of the stack portion 2056, it is convenient to implement the fixed connection between the stack portions 2056, and the electrode terminal 2053 is prevented from occupying excessive space between the end faces of the battery cells 2, and the electrical connection structure of the battery cells 2 is further optimized.

In some embodiments, the electrode terminal 2053 further includes a connecting portion 2061, configured to connect the stack portion 2056 and the extension portion 2055, so that the stack portion 2056 is staggered from the extension portion 2055 along the thickness direction Z. Normally, the thicknesses of the stack portion 2056 is equal to the thickness of the extension portion 2055, and is equal to the thickness of the electrode terminal 2053.

As shown in FIG. 4, FIG. 5, and FIG. 6, a connecting portion 2061 is disposed between the stack portion 2056 and the extension portion 2055. The stack portion 2056 may be regarded as being parallel to the extension portion 2055. One end of the connecting portion 2061 that is connected to the stack portion 2056 is at a different height than the other end that is connected to the extension portion 2055, so that the stack portion 2056 is staggered from the extension portion 2055 along the thickness direction Z.

Normally, the positions of the electrode terminals 2053 on the end faces of the battery cells 2 are identical. In a case that an end face of one battery cell 2 is disposed opposite to an end face of another battery cell, the electrode terminals 2053 of adjacent battery cells will inevitably interfere with each other when the electrode terminals are stacked. To avoid the interference, the stack portion 2056 is staggered from the extension portion 2055 along the thickness direction Z, that is, the two portions are disposed at different heights. In this way, the stacking of the electrode terminals 2053 is facilitated, and the adjacent electrode terminals 2053 dodge each other, so as to form a stacking structure. Normally, the electrode terminal 2053 is formed by stamping. The stack portion 2056, the connecting portion 2061, and the extension portion 2055 may be made in one piece, thereby facilitating manufacturing.

In some embodiments, a distance by which the stack portion 2056 is staggered from the extension portion 2055 is not greater than 1/2 of a thickness of the electrode terminal 2053.

As shown in FIG. 4, the distance by which the stack portion 2056 is staggered from the extension portion 2055 is D. D is a distance from a lower surface of the extension portion 2055 to a lower surface of the stack portion 2056 along the thickness direction Z, or a distance from an upper surface of the extension portion 2055 to an upper surface of the stack portion 2056 along the thickness direction Z. The thickness of the electrode terminal 2053 is E. E is a distance from an upper surface to a lower surface of the electrode terminal 2053 along the thickness direction Z. In this embodiment, the ratio of D to E is 0 to 1/2, thereby ensuring that the stack portions 2056 can be in contact with and fixedly connected to each other.

If the distance by which the stack portion 2056 is staggered from the extension portion 2055 is greater than 1/2 of the thickness of the electrode terminal 2053, the stack portions 2056 of the two electrode terminals 2053 will be separated from each other in a natural state, thereby being adverse to the fixed connection. In some embodiments, the distance by which the stack portion 2056 is staggered from the extension portion 2055 is less than or equal to 1/2 of the thickness of the electrode terminal 2053, so that all the stack portions 2056 can contact each other.

In some embodiments, a cross section of the connecting portion 2061 is linear or arcuate in shape.

As shown in FIG. 4, the cross section of the connecting portion 2061 is an arc shape. As shown in FIG. 5 and FIG. 6, the cross section of the connecting portion 2061 is a linear shape. The thicknesses of the connecting portion 2061 is equal to the thickness of the electrode terminal 2053.

The cross section of the connecting portion 2061 may be in various shapes, as long as the stack portion 2056 is staggered from the extension portion 2055 along the thickness direction Z. Applicable shapes include linear and arcuate shapes, and the connection strength such shapes can meet design requirements.

In some embodiments, the electrode terminal 2053 has a flat plate shape. The two electrode terminals 2053 of two battery cells 2, which are disposed opposite to each other along the first direction X, are staggered from each other along the thickness direction Z.

As shown in FIG. 7, the first electrode terminal 20531 partly overlaps the second electrode terminal 20532. Each electrode terminal 2053 may be regarded as still including the stack portion 2056 and the extension portion 2055. However, the stack portion 2056 is not staggered from the extension portion 2055 any longer. Instead, the two electrode terminals 2053 are disposed at different positions on the end faces of the battery cells 2, so that the two electrode terminals 2053 are stacked partly.

By disposing the two electrode terminals 2053 of adjacent battery cells 2 at different positions on the end faces, the adjacent electrode terminals 2053 dodge each other, so as to form a stacking structure. The electrode terminals 2053 do not need to be punched into special shapes, thereby simplifying the structure of the electrode terminals 2053. It needs to be noted that a flat electrode terminal 2053 still includes a tail 2060 (to be detailed later).

In some embodiments, the stack portion 2056 includes a first stack portion 2057 and a second stack portion 2058 that are separated from each other along a second direction Y. The second direction Y is perpendicular to the thickness direction Z.

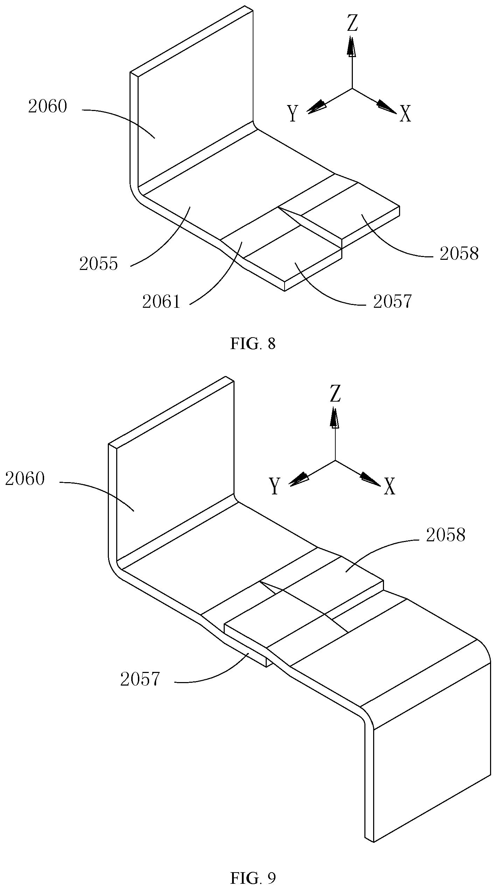

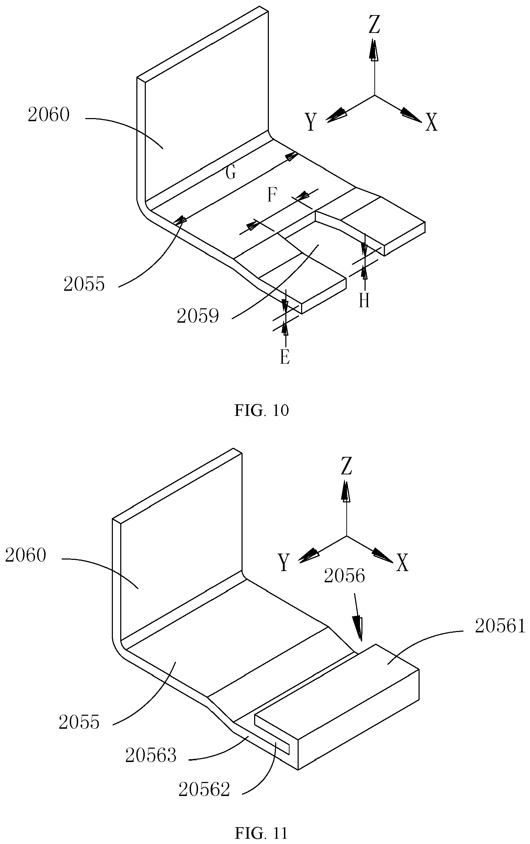

As shown in FIG. 8, FIG. 9, and FIG. 10, the first stack portion 2057 and the second stack portion 2058 are two independent parts. The first stack portion 2057 is contiguous to the second stack portion 2058 in FIG. 8 and FIG. 9. That is, there is no gap or a very small gap between the two stack portions along the second direction Y. In FIG. 10, the first stack portion 2057 is not contiguous to the second stack portion 2058, That is, there is a relatively large gap between the two stack portions.

With the first stack portion 2057 and the second stack portion 2058 disposed, the stack portions 2056 are diversified, and the types of the fixed connection structures between the stack portions 2056 are increased.

In some embodiments, along the second direction Y, a ratio of a width of a gap 2059 between the first stack portion 2057 and the second stack portion 2058 to a width of the stack portion 2056 is 0 to 1/3.

As shown in FIG. 10, there is a gap 2059 between the first stack portion 2057 and the second stack portion 2058. The width of the gap 2059 is F. F is a distance between two adjacent lateral faces of the first stack portion 2057 and the second stack portion 2058 along the second direction Y. The width of the stack portion 2056 is G. G is a distance between two lateral faces of the stack portion 2056 along the second direction Y. In this embodiment, a ratio of F to G is 0 to 1/3, thereby ensuring stability of the connection structure between the stack portions 2056.

If the gap 2059 is larger than 1/3 of the width of the stack portion 2056, a stacking area between the stack portions 2056 is relatively small. After being connected fixedly, the stack portions are prone to be separated under an external force. By limiting the width of the gap 2059, the stability of the connection structure is ensured between the stack portions 2056.

In some embodiments, the first stack portion 2057 is staggered from the second stack portion 2058 along the thickness direction Z.

As shown in FIG. 8, FIG. 9, and FIG. 10, the first stack portion 2057 and the second stack portion 2058 may be regarded as being parallel to each other and located at different heights.

With the first stack portion 2057 staggered from the second stack portion 2058, the two fixedly connected stack portions 2056 can not only limit each other in the thickness direction Z, but also limit each other in the width direction (that is, the second direction Y), thereby improving the stability of the connection structure between the stack portions 2056.

In some embodiments, the distance by which the first stack portion 2057 is staggered from the second stack portion 2058 is not less than the thickness of the electrode terminal 2053.

As shown in FIG. 8, FIG. 9, and FIG. 10, the distance by which the first stack portion 2057 is staggered from the second stack portion 2058 is H. H is a distance from an upper surface of the first stack portion 2057 to an upper surface of the second stack portion 2058 along the thickness direction Z. The thickness of the electrode terminal 2053 is E. E is a distance from an upper surface to a lower surface of the electrode terminal 2053 along the thickness direction Z. In this embodiment, H is greater than or equal to E, thereby ensuring that the two stack portions 2056 can be stacked in a staggered way.

If the distance by which the first stack portion 2057 is staggered from the second stack portion 2058 is less than the thickness of the electrode terminal 2053, the two stack portions 2056 will interfere with each other instead of being stacked in staggered way. When the distance by which the first stack portion 2057 is staggered from the second stack portion 2058 is greater than or equal to the thickness of the electrode terminal 2053, the two stack portions 2056 can be stacked together in a staggered way.

In some embodiments, two adjacent stack portions 2056 are configured to enable stacking of the two electrode terminals 2053 by snap-fitting into each other.

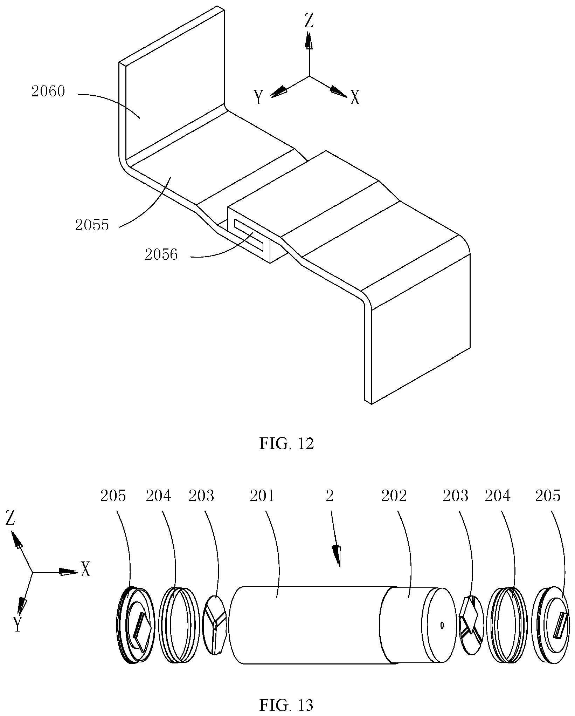

As shown in FIG. 11 and FIG. 12, the two stack portions 2056 are both stacked and snap-fitted to each other, and are connected variously.

With the stack portions 2056 that can snap-fit into each other, the connection strength is increased between the stack portions 2056. Especially, when the battery cells 2 are vibrating, the stack portions 2056 are not prone to separate, thereby ensuring the reliability of the electrical connection between the battery cells 2.

In some embodiments, one of the two adjacent stack portions 2056 includes a plug portion 20561, and the other of the two adjacent stack portions includes a receptacle portion 20562. The receptacle portion 20562 is configured to hold the plug portion 20561 so that the two adjacent stack portions 2056 snap-fit into each other.

As shown in FIG. 11 and FIG. 12, the two stack portions 2056 each include a plug portion 20561 and a receptacle portion 20562. The plug portion 20561 of one stack portion 2056 is inserted into the receptacle portion 20562 of the other stack portion 2056 to form a snap-fitting relationship.

The snap-fitting structures is diversified. For example, a bulge and a groove may be provided on the stack portion 2056 along the thickness direction Z. The bulge and the groove snap-fit into each other. The structures of the plug portion 20561 and the receptacle portion 20562 are highly manufacturable and formable, and facilitate snap-fitting.

In some embodiments, the stack portion 2056 is configured to be bent toward the end face along the first direction X to form the plug portion 20561 and the receptacle portion 20562.

As shown in FIG. 11 and FIG. 12, each stack portion 2056 is bent toward the end face of the battery cell 2 on which the stack portion is located, so as to form the plug portion 20561 and the receptacle portion 20562.

With the stack portion 2056 bent toward the end face of the battery cell 2, the stack portion 2056 can form a hook shape, so that the stack portion can not only be stacked but also be hooked, thereby further improving the connection strength between the stack portions 2056.

In some embodiments, the stack portion 2056 further includes a body portion 20563 configured to connect the extension portion 2055 and the plug portion 20561. The body portion 20563 is disposed opposite to, and spaced apart from, the plug portion 20561 along the thickness direction Z to form the receptacle portion 20562.

As shown in FIG. 11 and FIG. 12, the body portion 20563 and the plug portion 20561 may be regarded as being parallel to each other and located at different heights.

The snap-fitting structure formed in this way is highly manufacturable and formable, and achieves a relatively large space of the receptacle portion 20562, thereby increasing the strength of the snap-fitting structure.

The arrangement of the electrode terminals 2053 in the battery cells 2 is shown in FIG. 13, FIG. 14, and FIG. 15. The battery cell 2 includes:
a housing 201, where openings are made at two ends of the housing 201 along the first direction X;
an electrode assembly 202, where the electrode assembly 202 is disposed inside the housing 201.
two electrode terminals 2053, where the two electrode terminals 2053 are disposed at two ends of the battery cell 2 along the first direction X respectively;
two connecting members 203, where the two connecting members 203 are disposed inside the housing 201 and disposed at two ends of the electrode assembly 202 respectively, and are configured to electrically connect the electrode assembly 202 and the electrode terminal 2053; and
two end caps 2051, where the two end caps 2051 are disposed at openings of the housing 201 and configured to seal the housing 201.

In an embodiment of this application, the end face of the battery cell 2 is an outer end face of the end cap 2051.

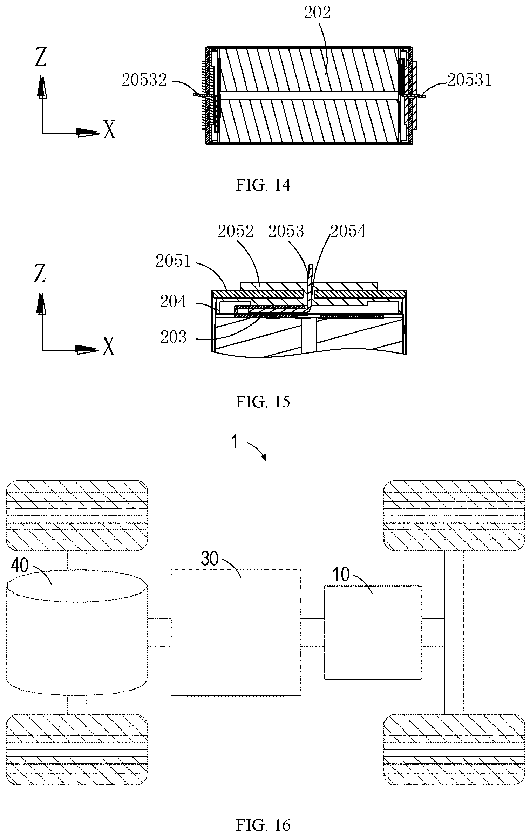

As shown in FIG. 14, the structures of the two electrode terminals 2053 are identical. The two ends of the battery cell 2 are oriented differently. The two electrode terminals 2053 each include a stack portion 2056, an extension portion 2055, and a tail 2060. The stack portion 2056 is located outside the housing 201. The extension portion 2055 passes through the end cap 2051. The tail 2060 is located inside the housing 201 and configured for electrical connection to the connecting member 203.

As shown in FIG. 15, a mounting hole 2054 is made at the center of the end cap 2051. The extension portion 2055 passes through the mounting hole 2054. A sealing element 2052 is disposed at a position corresponding to the mounting hole 2054, and is configured to seal a gap between the extension portion 2055 and the mounting hole 2054. The sealing element 2052 may be made by a nano-injection molding process.

According to a second aspect of embodiments of this application, an electrical device is provided. The electrical device includes the battery 10 described in the first aspect above. The battery 10 is configured to provide electrical energy for the electrical device.

Understandably, the battery 10 described in this embodiment of this application is applicable to various devices that use a battery 10, for example, a mobile phone, a portable device, a notebook computer, an electric power cart, an electric vehicle, a ship, a spacecraft, an electric toy, an electric tool. For example, the spacecraft includes an airplane, a rocket, a space shuttle, a spaceship, and the like. The electric toy includes a fixed or mobile electric toy, such as a game console, an electric car toy, an electric ship toy, an electric airplane toy, and the like. The electric tool includes an electric tool for metal cutting, an electric grinding tool, an electric assembly tool, an electric tool for railways, such as an electric drill, an electric grinder, an electric wrench, an electric screwdriver, an electric hammer, an electric impact drill, a concrete vibrator, and an electric planer.

The battery 10 described in this embodiment of this application is not only applicable to the devices described above, but also applicable to all devices that use the battery 10. However, for brevity, the following embodiment is described by using an electric vehicle as an example.

For example, refer to FIG. 16, which is a brief schematic view of a vehicle 1 according to an embodiment of this application. The vehicle 1 may be an oil-fueled vehicle, a natural gas vehicle, or a new energy vehicle. The new energy vehicle may be a battery electric vehicle, a hybrid electric vehicle, a range-extended electric vehicle, or the like. As shown in FIG. 16, the battery 10 may be disposed inside the vehicle 1. For example, the battery 10 may be disposed at the bottom, front, or rear of the vehicle 1. The battery 10 may be configured to supply power to the vehicle 1. For example, the battery 10 may serve as an operating power supply of the vehicle 1. In addition, the vehicle 1 may further include a controller 30 and a motor 40. The controller 30 is configured to control the battery 10 to supply power to the motor 40, for example, to start or navigate the vehicle 1, or meet the operating power requirements of the vehicle in operation. In another embodiment of this application, the battery 10 serves not only as an operating power supply of the vehicle 1, but may also serve as a drive power supply of the vehicle 1 to provide driving motive power for the vehicle 1 in place of or partially in place of oil or natural gas.

As shown in FIG. 16, the battery cells 2 can be electrically connected to each other in a horizontal way. A plurality of battery cells 2 can be accommodated in the height direction according to an internal mounting space of the vehicle 1, thereby taking full advantage of the internal mounting space of the vehicle 1, facilitating assembling of the vehicle 1, and increasing the capacity of the battery 10 mounted in the vehicle 1.

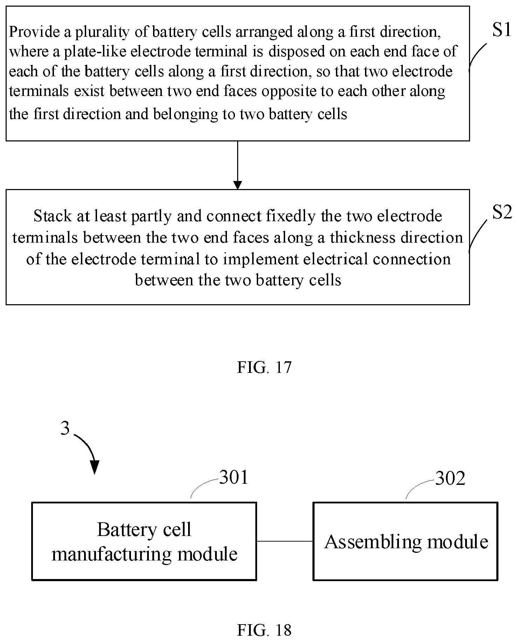

According to a third aspect of embodiments of this application, a method for manufacturing a battery is provided. As shown in FIG. 17, the method includes the following steps:

Step S1: Provide a plurality of battery cells 2 arranged along a first direction X, where a plate-like electrode terminal 2053 is disposed on each end face of each of the battery cells 2 along a first direction X, so that two electrode terminals 2053 of two battery cells 2 are disposed between two end faces opposite to each other along the first direction X; and

Step S2: Stack at least partly and connect fixedly the two electrode terminals 2053 between the two end faces along a thickness direction Z of the electrode terminal 2053 to enable electrical connection between the two battery cells 2.

For information not detailed in this embodiment, refer to the preceding embodiments.

According to a fourth aspect of embodiments of this application, a device 3 for manufacturing a battery is further provided. As shown in FIG. 18, the device includes:
a battery cell manufacturing module 301, configured to manufacture a plurality of battery cells 2, where a plate-like electrode terminal 2053 is disposed on each end face of each of the battery cells 2 along a first direction X, so that two electrode terminals 2053 of two battery cells 2 are disposed between two end faces opposite to each other along the first direction X; and
an assembling module 302, configured to electrically connect the plurality of battery cells 2, where the two electrode terminals 2053 are configured to be at least partly stacked and fixedly connected between the two end faces along a thickness direction Z of the electrode terminal 2053 to enable electrical connection between the two battery cells 2.

For information not detailed in this embodiment, refer to the preceding embodiments.

Finally, it needs to be noted that the foregoing embodiments are merely intended to describe the technical solutions of this application, but not to limit this application. Although this application is described in detail with reference to the foregoing embodiments, a person of ordinary skill in the art understands that modifications may still be made to the technical solutions described in the foregoing embodiments or equivalent replacements may still be made to some technical features thereof, without making the essence of the corresponding technical solutions depart from the spirit and scope of the technical solutions of the embodiments of this application.

## Claims

1. A battery, **characterized in that** the battery comprises:
a plurality of battery cells (2) arranged along a first direction (X), wherein a plate-like electrode terminal (2053) is disposed on each end face of each of the battery cells (2) along a first direction (X), so that two electrode terminals (2053) of two battery cells (2) are disposed between two end faces opposite to each other along the first direction (X); and
the two electrode terminals (2053) are configured to be at least partly stacked and fixedly connected between the two end faces along a thickness direction (Z) of the electrode terminal (2053) to enable electrical connection between the two battery cells (2).

2. The battery according to claim 1, **characterized in that** the electrode terminal (2053) comprises:
a stack portion (2056), configured to enable stacking of the two electrode terminals (2053); and
an extension portion (2055), configured to be connected to the stack portion (2056), wherein the extension portion (2055) protrudes from the end face by a preset length.

3. The battery according to claim 2, **characterized in that** a ratio of the preset length to a length of the stack portion (2056) along the first direction (X) is 0.25 to 1.

4. The battery according to claim 2 or 3, **characterized in that** the electrode terminal (2053) further comprises a connecting portion (2061), configured to connect the stack portion (2056) and the extension portion (2055), so that the stack portion (2056) is staggered from the extension portion (2055) along the thickness direction (Z).

5. The battery according to claim 4, **characterized in that** a distance by which the stack portion (2056) is staggered from the extension portion (2055) is not greater than 1/2 of a thickness of the electrode terminal (2053).

6. The battery according to claim 4 or 5, **characterized in that** a cross section of the connecting portion (2061) is linear or arcuate in shape.

7. The battery according to any one of claims 1 to 3, **characterized in that** the electrode terminal (2053) is in a flat plate shape, and the two electrode terminals (2053) of the two battery cells (2), which are disposed opposite to each other along the first direction (Z), are staggered from each other along the thickness direction (Z).

8. The battery according to any one of claims 2 to 7, **characterized in that** the stack portion (2056) comprises a first stack portion (2057) and a second stack portion (2058) that are separated from each other along a second direction (Y), the second direction (Y) being perpendicular to the thickness direction (Z).

9. The battery according to claim 8, **characterized in that**, along the second direction (Y), a ratio of a width of a gap (2059) between the first stack portion (2057) and the second stack portion (2058) to a width of the stack portion (2056) is 0 to 1/3.

10. The battery according to claim 8 or 9, **characterized in that** the first stack portion (2057) is staggered from the second stack portion (2058) along the thickness direction (Z).

11. The battery according to claim 10, **characterized in that** a distance by which the first stack portion (2057) is staggered from the second stack portion (2058) is not less than a thickness of the electrode terminal (2053).

12. The battery according to any one of claims 2 to 11, **characterized in that** two adjacent stack portions (2056) are configured to enable stacking of the two electrode terminals (2053) by snap-fitting into each other.

13. The battery according to claim 12, **characterized in that** one of the two adjacent stack portions (2056) comprises a plug portion (20561), the other of the two adjacent stack portions comprises a receptacle portion (20562), and the receptacle portion (20562) is configured to hold the plug portion (20561) so that the two adjacent stack portions (2056) snap-fit into each other.

14. The battery according to claim 13, **characterized in that** the stack portion (2056) is configured to be bent toward the end face along the first direction (X) to form the plug portion (20561) and the receptacle portion (20562).

15. The battery according to claim 14, **characterized in that** the stack portion further comprises a body portion (20563) configured to connect the extension portion (2055) and the plug portion (20561), and the body portion (20563) is disposed opposite to, and spaced apart from, the plug portion (20561) along the thickness direction (Z) to form the receptacle portion (20562).

16. An electrical device, **characterized in that** the electrical device comprises the battery according to any one of claims 1 to 15, and the battery is configured to provide electrical energy.

17. A method for manufacturing a battery, **characterized in that** the method comprises:
providing a plurality of battery cells (2) arranged along a first direction (X), wherein a plate-like electrode terminal (2053) is disposed on each end face of each of the battery cells (2) along a first direction (X), so that two electrode terminals (2053) of two battery cells (2) are disposed between two end faces opposite to each other along the first direction (X); and
stacking at least partly and connecting fixedly the two electrode terminals (2053) between the two end faces along a thickness direction (Z) of the electrode terminal (2053) to enable electrical connection between the two battery cells (2).

18. A device for manufacturing a battery, **characterized in that** the device comprises:
a battery cell manufacturing module (301), configured to manufacture a plurality of battery cells (2), wherein a plate-like electrode terminal (2053) is disposed on each end face of each of the battery cells (2) along a first direction (X), so that two electrode terminals (2053) of two battery cells (2) are disposed between two end faces opposite to each other along the first direction (X); and
an assembling module (302), configured to electrically connect the plurality of battery cells (2), wherein the two electrode terminals (2053) are configured to be at least partly stacked and fixedly connected between the two end faces along a thickness direction (Z) of the electrode terminal (2053) to enable electrical connection between the two battery cells (2).
